# EUROPÄISCHE PATENTSCHRIFT

(11) **EP 1 656 194 B1**
(45) Veröffentlichungstag und Bekanntmachung des Hinweises auf die Patenterteilung: **28.11.2007**
(21) Anmeldenummer: 04762527.2
(22) Anmeldetag: 28.07.2004
(51) Int. Cl.: B01D 35/30, B01D 29/31

(54) **KERAMISCHES FILTERELEMENT ZUR REINIGUNG VON WASSER**
CERAMIC FILTER ELEMENT FOR WATER PURIFICATION
ELEMENT FILTRANT CERAMIQUE POUR LA PURIFICATION DE L'EAU

(30) Priorität: 01.08.2003 DE 10335343
(43) Veröffentlichungstag der Anmeldung: 17.05.2006
(73) Patentinhaber: ItN Nanovation AG, 66117 Saarbrücken (DE)
(72) Erfinder: BINKLE, Olaf, 66459 Kirkel (DE); NONNINGER, Ralph, 66129 Saarbrücken (DE); ROHDE, Harald, 33039 Nieheim (DE); VOLZ, Romeo, 66787 Wadgassen (DE)
(74) Vertreter: Kohler Schmid Möbus
(86) Internationale Anmeldenummer: PCT/DE2004/001682
(87) Internationale Veröffentlichungsnummer: WO 2005/011839

(56) Entgegenhaltungen:
- EP-A- 0 539 069
- WO-A-02/100780
- US-A- 4 615 812
- US-A- 5 273 650
- US-B1- 6 203 697

## Beschreibung

### Stand der Technik

Die Erfindung betrifft einen Filter mit einem keramischen Filterelement zur Reinigung von Wasser.

In vielen Ländern stellt die Versorgung der Bevölkerung mit Trinkwasser das größte Problem der Zukunft dar. Speziell in Ballungszentren oder abseits der Zivilisation muss damit gerechnet werden, dass das Trinkwasser mit Schmutz und Krankheitserregern, wie Bakterien, Viren und Sporen verunreinigt ist. Durchfall, Cholera, Typhus, Hepatitis, Kinderlähmung oder Wundstarrkrampf sind nur einige Beispiele von Krankheiten, die durch verkeimtes Trinkwasser übertragen werden können und an denen jedes Jahr u. a. drei bis vier Millionen Kinder weltweit sterben. Insbesondere in den Metropolen der Entwicklungsländer landen bis zu 90% der Abfälle ungeklärt in Flüssen oder im Grundwasser. Die Weltgesundheitsorganisation rechnet damit, dass im Jahre 2050 nahezu die Hälfte der Weltbevölkerung (44%) keinen Zugang mehr zu sauberem Wasser hat.

Da man bereits davon ausgeht, dass im 21. Jhd. die meisten Kriege mit dem Ziel geführt werden, den Zugang zu sauberem Wasser zu erhalten, wird das Trinkwasserproblem weltweit angegangen. So versucht man z.B. für ausreichende Kläranlagen zu sorgen, Meerwasser zu entsalzen oder chemische Desinfektionen mit Chlor oder Ozon zu etablieren. Dass die Probleme auch trotz dieser Maßnahmen nicht gelöst sind, zeigt sich u.a. auch daran, dass in vielen Hotels der Welt davor gewarnt wird, das Leitungswasser zu trinken. Diese Warnungen kann man in den USA genauso lesen wie in Russland oder China. Lediglich in Mittel-, West- und Nordeuropa besitzt das Trinkwasser aus dem Wasserhahn gute Qualität. Aber auch dort gilt, sollte das Wasser länger gelagert werden, z.B. in Wassertanks, so sind Wasseraufbereitungsmittel, wie Chlor oder Silberionen, unerlässlich.

Kläranlagen, Meerwasserentsalzungsanlagen etc. dienen dazu, das Wasserproblem großtechnisch anzugehen. Da diese Maßnahmen aber sehr kostenintensiv sind, lebt bereits heute mehr als die Hälfte der Weltbevölkerung mit qualitativ schlechtem, in den meisten Fällen verkeimtem Trinkwasser. In Ländern wie China wird Trinkwasser in Kanistern auf dem Markt gekauft. Das Bedürfnis des Einzelnen nach sauberem Trinkwasser beginnt also nicht erst fernab der Zivilisation, wenn das Trinkwasser nur noch aus Tümpeln, Bächen, Brunnen oder Flüssen gewonnen werden kann, sondern bereits deutlich früher.

Für den sogenannten Outdoor-Bereich wurden bereits frühzeitig Trinkwasserfilter eingeführt, die handlich und robust sind und in jeden Rucksack passen. Weltmarktführer für solche mobilen Filtersysteme ist die Firma Katadyn, die solche Produkte heute unter der Kennzeichnung Namen "Certipur" verkauft. Solche Filter besitzen in ihrem Inneren einen porösen Behälter z.B. aus Kunststoff (Polymer) oder Diatomeenerde, welcher mit Aktivkohle und Silberverbindungen bestückt ist und durch den das Schmutzwasser gepumpt wird. Die Aktivkohle im Inneren des porösen Behälters dient aufgrund ihrer immensen Oberfläche dazu, die Keime aus dem Wasser abzutrennen und zu absorbieren. Das Silber dient dazu, die Keime abzutöten. Solche Filter wurden speziell für Trekker entwickelt und für Expeditionen konzipiert. Sie halten extreme Belastungen aus, sind aber aufwändig und teuer und somit nicht für Massenanwendungen entwickelt worden.

Es hat nicht an Versuchen gefehlt, Filter herzustellen, die auch für Massenanwendungen geeignet sind und den Einzelnen mit sauberem Wasser versorgen können. Bei diesen Filtersystemen handelt es sich nahezu ausschließlich um stationäre Wasseraufbereitungsanlagen, die vor dem Wasserhahn in die Wasserleitung integriert werden und das Wasser chemisch oder physikalisch entkeimen. Eine Ausnahme ist hier der Wasserfilter der Fa. Brita, der auf Basis eines Ionentauschers arbeitet und als mobile Anlage z.B. in der Küche (analog einer Kaffeemaschine) betrieben wird. Diesen Systemen ist gemeinsam, dass sie aufwändig und teuer sind.

Einfache Geräte, die verhältnismäßig kostengünstig sind, arbeiten auf Basis eines porösen Polymerfilters, der mit Aktivkohle kombiniert wird (Fa. Filtrix, Tochter eines des größten Hersteller von Aktivkohle, Fa. Norit oder Fa. Smith Hodgins). Da die Polymere jedoch nicht für hohe Temperaturen, nicht für mechanische Belastungen (z.B. Reinigung) und nicht für saures bzw. basisches Wasser ausgelegt sind, ist deren Einsatzgebiet stark begrenzt. Solche Filter können nicht für See-, Brack-, kohlendioxyd- oder zuckerhaltiges Wasser verwendet werden. Das größte Problem dieser Filter ist aber, dass sie nur sehr schwer zu reinigen sind (wenn überhaupt mit chemischen Reinigern) oder aber gleich als Einmalprodukte verkauft werden.

Um letztgenannte Nachteile und hier insbesondere die Schwierigkeit der Reinigung zu umgehen, verwendet die Fa. Doulton sogenannte keramische Kerzen als äußere Hülle ihrer Filter. In ihren Produktbeschreibungen schlägt die Fa. Doulton u.a. vor, diese keramischen Kerzen nach Gebrauch mit Schleifpapier unter dem Wasserhahn zu reinigen. Diese Kerzen, die keinerlei Filterfunktion haben, sind wasserdurchlässig und enthalten Silberionen, die die Entkeimung fördern. Gefüllt sind diese Kerzen mit dem eigentlichen Filtermaterial Aktivkohle, die aufgrund ihrer hohen Oberfläche die Schadstoffe adsorbieren kann und dadurch das Wasser reinigt.

Zusammengefasst lässt sich sagen, dass weltweit sauberes Trinkwasser rar wird und gegen 2050 über 40 % der Weltbevölkerung keinen Zugang mehr zu sauberem Trinkwasser haben werden. Kläranlagen, Meerwasserentsalzungsanlagen etc. gehen dieses Problem an, aufgrund hoher Kosten und politischer Gegebenheiten ist flächendeckend das Problem nicht gelöst. Lediglich in Nord-, Mittel- und Westeuropa hat Trinkwasser eine gute Qualität.

Um den Einzelnen mit qualitativ gutem Trinkwasser zu versorgen, gibt es kostenintensive und aufwändige Outdoorlösungen, die nicht für Massenanwendungen gedacht sind. Diese Lösungen arbeiten mit Aktivkohle, die aufgrund ihrer hohen Oberfläche die Bakterien aus dem Schmutzwasser absorbiert und mit Silber, das die Bakterien abtötet. Weiterhin sind stationäre und eine mobile Anlage(n) bekannt, die ebenfalls über Aktivkohle oder über lonenaustauscher das Wasser säubern. Das sehr aufwändige und teure Prinzip lässt auch hier Massenanwendungen, insbesondere in ärmeren Staaten, als undenkbar erscheinen. Interessant sind jedoch die Ansätze, die neben der Verwendung von Aktivkohle beginnen mit Polymerfiltern Bakterien abzutrennen. Die Polymerfilter können Porengrößen über weite Bereiche abdecken, sind aber als Filtermaterial sehr anfällig. Auch ist ihr Betrieb (aufwändiges Durchpumpen von Schmutzwasser) sehr umständlich und eine Reinigung, wenn überhaupt, nur auf chemischem Wege möglich.

Aus den Druckschriften US 6 203 6971 B und die US 4 615 812 A sind verschraubbare Filtergehäuse bekannt. Dabei wird jeweils auch eine Durchflussöffnung mittels einer Verschlussschraube verschlossen. Durch Öffnen der Verschlussschrauben wird das Filterelement aus seinem Gehäuse entnommen und kann so gereinigt werden.

Aufgabe der Erfindung ist es, einen neuen Wasserfilter zu entwickeln, der über ein einfaches, kostengünstiges Trennprinzip verfügt, eine leichte Handhabung realisiert, mechanisch, chemisch und physikalisch in einem großen Temperaturbereich stabil und darüber hinaus leicht zu reinigen ist.

Die Aufgabe wird durch einen Filter mit einem keramischen Filterelement gemäß Anspruch 1 gelöst. Das Filterelement besteht aus einem rohrförmigen Körper, der aus mindestens einer Wandung und mindestens einer über der gesamten Länge des rohrförmigen Körpers ausgebildeten Durchlassöffnung gebildet ist, wobei die mindestens eine Wandung als Funktionsschicht oder als Träger mit einer Funktionsbeschichtung ausgebildet ist und das zu filternde Wasser druckbeaufschlagt entweder von der Außenoberfläche in die Durchlassöffnung oder über die Innenoberfläche der Durchlassöffnung zur Außenoberfläche des keramischen Filterelements strömt.

Erfindungsgemäß ist das keramische Filterelement in ein Gehäuse eingebaut, das einen Wasserablauf und bevorzugt an einem offenen ersten Ende der Durchlassöffnung einen Wasserzulauf aufweist, wobei das Gehäuse eine, ein offenes zweites Ende der Durchlassöffnung verschließende, Verschlussschraube aufweist.

Durch Abschrauben der Verschlussschraube wird die Durchlassöffnung geöffnet, wodurch ein Durchspülen des Filterelements ohne komplettes Auseinanderbauen ermöglicht wird. Die Verschlussschraube wird aus dem Gehäuse entfernt und das keramische Filterelement kann über seine gesamte axiale Länge von Flüssigkeit zu Reinigungszwecken durchströmt werden. Insbesondere wenn das zu filternde Wasser über die Innenoberfläche der Durchlassöffnung zur Außenoberfläche des keramischen Filterelements strömt können auf diese Weise in der Durchlassöffnung verbleibende Rückstände leicht entfernt werden.

Unter Funktionsschicht wird in diesem Zusammenhang ein keramischer Formkörper oder eine keramische Schicht beliebiger Dicke verstanden, durch die die Filterfunktion ausgeübt wird. Die Dicke der Wandung kann über den Querschnitt des Filterelements gesehen unterschiedlich sein.

Mit diesen Merkmalen ist ein keramisches Filterelement geschaffen, das in einer kompakten Bauweise hergestellt werden kann, beispielsweise mit einem Durchmesser von 2,5 cm bis 3,5 cm und einer Länge von ca. 15 cm. Damit ist es auch leicht zu transportieren. Das keramische Filterelement ist zur Filtration von beliebig belastetem Wasser einsetzbar und kann in unterschiedlichster Weise betrieben werden. Es ist gegenüber Polymerfiltern mechanisch stabil, chemisch inert und hochtemperaturbeständig. Über die Temperatur beim Sintern (Brand) und die Partikelgröße der eingesetzten Materialien der keramischen Filterelemente lässt sich weiterhin sehr einfach die Porengrößenverteilung des keramischen Filterelements maßschneidern, so dass sich z.B. auch Bakterien- oder Virenfilter darstellen lassen. Selbstverständlich lassen sich diese keramischen Filterelemente auch optional mit silberionenhaltigen Verbindungen versehen, die ihrerseits eine bakterizide Wirkung besitzen.

Das keramische Filterelement lässt sich leicht durch Bürsten, Rückspülen oder durch Abkochen in Wasser reinigen und ist für den Langzeitgebrauch uneingeschränkt geeignet. Eine Reinigung ist aber auch über eine chemische Behandlung, z.B. mit Oxidationsmitteln oder Säuren möglich.

Ist das keramische Filterelement als stabförmiges Element im Querschnitt kreisrund mit mehreren Durchlassöffnungen ausgebildet, so kann mit geringsten Außenabmessungen eine große Filterfläche geschaffen werden.

Das keramische Filterelement ist über einen Sinterprozess aus chemischen Verbindungen aus der Gruppe der Chalkogenide, bevorzugt Oxide und/oder Sulfide und/oder Carbide oder Nitride hergestellt. Hierbei handelt es sich um (gegebenenfalls hydratisierte) Oxide z.B. folgender Elemente: Zn, Ce, Sn, Al, B, Si, Ti, Zr, Y, La, Fe, Cu, Ag, Ta, Nb, V, Mo oder W, bevorzugt ZrO₂, Al₂O₃, TiO₂, CeₓO_{y}, FeₓO_{y}, ZnO, Y₂O₃, SnO₂, und SiO₂, aber auch Phosphate, Silikate, Aluminate und Stannate, z.B. Bariumstannat, Sulfide von z.B. Zn und Ag, Carbide von z.B. W oder Si, Nitride von z.B. Al, Si oder Ti, entsprechende Mischoxide, wie Metall-Zinn-Oxide, z.B. Indium-Zinn-Oxide (ITO), Antimon-Zinn-Oxid (ATO), Fluor-dotiertes Zinnoxid und Zn-dotiertes Aluminiumoxid oder Mischoxide wie BaTiO₃. Weiterhin können Mischungen der angegebenen Pulver eingesetzt werden. Die keramischen Filterelemente können aus den vorgenannten Mischungen ausschließlich hergestellt werden oder die keramischen Filterelemente werden auf der Innen- und/oder Außenoberfläche beschichtet, wobei die einzelnen Beschichtungen aus den vorgenannten Pulvermischungen bestehen können. Werden Beschichtungen vorgenommen, so handelt es sich um Beschichtungsdicken von bevorzugt 100 nm bis 200 µm und überwiegend werden Beschichtungsdicken von 2 µm bis 100 µm eingesetzt.

Werden die keramischen Filterelemente ausschließlich aus einer Funktionsschicht hergestellt, so können diese Funktionsschichten nach Anwendung mit Poren im Größenbereich von 100 nm bis 10 µm porös ausgebildet sein. Die Porenverteilung kann je nach Bedarf sehr eng oder aber auch breit gestreut gewählt werden. Sind die keramischen Filterelemente aus einem Träger und einer Funktionsbeschichtung hergestellt, so weist der Träger in der Regel eine Porengröße von 1 bis 2 µm auf und die Beschichtungen haben eine Porengröße, die immer kleiner ist als die Teilchen des auszufiltrierenden Stoffes.

In einer weiteren Ausführungsform weist das keramische Filterelement ein Mundstück auf. In dieser Ausführungsform kann das keramische Filterelement auch durch Anlegen eines Vakuums betrieben werden. Im einfachsten Falle indem man das keramische Filterelement mit einem verschlossenen Ende, also bevorzugt mit dem mit der Verschlussschraube verschlossenen Ende, in Schmutzwasser eintaucht und am offenen Ende des keramischen Filterelements ein Mundstück ausbildet. Das erfindungsgemäße keramische Filterelement kann in diesem Zusammenhang wie ein Strohhalm genutzt werden. Denkbar sind auch Ausführungsformen ohne Mundstück.

Dadurch, dass das keramische Filterelement in ein Gehäuse eingebaut ist, das einen Wasserzulauf und einen Wasserablauf aufweist, kann es an jeden Wasserhahn angeschraubt werden und ist somit für den Masseneinsatz tauglich und extrem bedienerfreundlich. Übliche Drücke aus Wasserrohrleitungen von 2 bis 6 bar reichen zur Filtration von Schmutzwasser aus. Bevorzugt sind am Gehäusedeckel und/oder Gehäusekörper Schnellverschlüsse zum Ankoppeln an Armaturen und/oder Schläuche anbringbar und/oder ausgebildet. Dies hat den Vorteil, dass das keramische Filterelement an jedweden gängigen Wasserzufluss angeschlossen werden kann. Dies kann über einen Schraubverschluss oder über einen sogenannten Schnellverschluss (z.B. Gardena-System) oder alle dem Fachmann bekannten Verschlussarten erfolgen. Selbstverständlich kann das keramische Filterelement auch dann betrieben werden, wenn der das Schmutzwasser fördernde Druck nicht aus einem Wasserleitungssystem kommt.

Das Gehäuse ist in diesem Zusammenhang bevorzugt mehrteilig aus einem Gehäusedeckel und einem Gehäusekörper gebildet. Dies hat den Vorteil, dass das keramische Filterelement einfachst gewartet und gesäubert werden kann. Entweder kann das zu reinigende oder auszuwechselnde keramische Filterelement ausgetauscht werden, indem man das Gehäuse öffnet oder man entfernt die Verschlussschraube über ein einfaches Drehen und erreicht somit eine sehr effiziente Rückspülbarkeit zum Säubern des Filters.

Ist das Gehäuse mehrteilig aufgebaut, so sind die einzelnen Gehäuseteile flüssigkeitsdicht lösbar miteinander verbunden. Dies hat den Vorteil, dass das erfindungsgemäße keramische Filterelement druckbeaufschlagt betrieben werden kann.

Ist das keramische Filterelement aus einem grobporösen Träger und aus einer dünnen Funktionsbeschichtung gebildet, die für die eigentliche Porengrößenverteilung verantwortlich ist, so hat dies den Vorteil, dass durch den grobporösen Träger ein zu filtrierendes Wasser mit weniger Widerstand durch diesen Träger hindurchströmen kann. Mit dieser Maßnahme können die Durchflussmengen gegenüber feinporigen Filterelementen, die über ihren gesamten Querschnitt diese feinporige Struktur aufweisen, signifikant erhöht werden und der Wirkungsgrad des eingesetzten keramischen Filterelements ist erhöht.

In besonderen Ausführungsformen können die Gehäuseinnenoberflächen und das keramische Filterelement selbst biozid und/oder mit einem Silberionen enthaltenden Werkstoff beschichtet und/oder behandelt sein. Dies erweitert die Einsatzmöglichkeiten des keramischen Filterelements.

Weitere Vorteile ergeben sich aus der Figurenbeschreibung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigt:
- **Fig. 1**: einen Vertikalschnitt durch ein erfindungsgemäß verwendbares keramisches Filterelement;
- **Fig. 2**: eine Draufsicht auf einen Vollkörper eines erfindungsgemäß verwendbaren keramischen Filterelements gemäß II-II von Fig. 1;
- **Fig. 3**: einen erfindungsgemäßen Filter mit einem keramischen Filterelement eingebaut in ein mehrteiliges Gehäuse mit einem Wasserzulauf und einem Wasserablauf;
- **Fig. 4**: einen erfindungsgemäßen Filter mit einem Aktivkohlefilterelement.

Die einzelnen Figuren der Zeichnung zeigen den erfindungsgemäßen Gegenstand stark schematisiert und die gezeigten Darstellungen sind nicht maßstäblich zu verstehen.

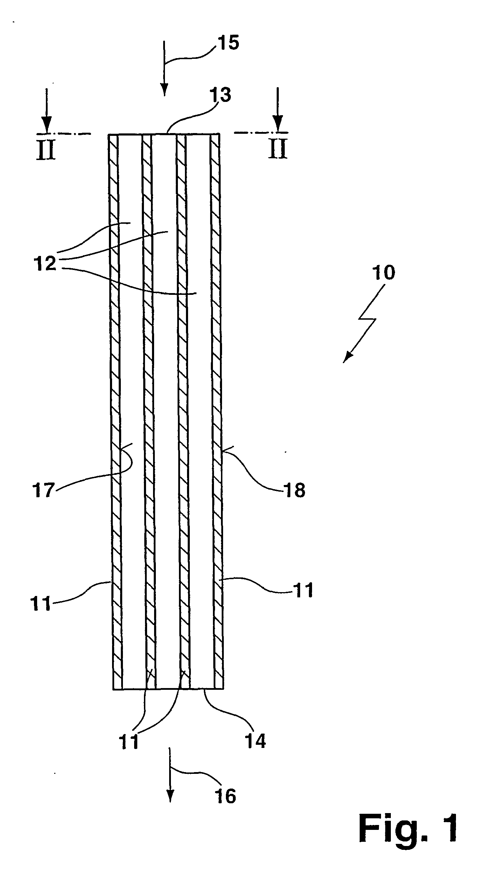

**Fig. 1** zeigt ein keramisches Filterelement 10 in einem Vertikalschnitt mit Wandungen 11 aus einem porösen gesinterten Material und Durchlassöffnungen 12, durch die entweder das zu filtrierende Wasser oder das Filtrat strömen kann. Das keramische Filterelement 10 weist ein offenes erstes Ende 13 und ein offenes zweites Ende 14 auf. Durchströmrichtungen für das zu filtrierende Wasser sind mit den Pfeilen 15 und 16 angegeben. Ist eines der Enden 13, 14 verschlossen, so kann ein zu filtrierendes Wasser druckbeaufschlagt durch die Wandungen einer Innenoberfläche 17 oder einer Außenoberfläche 18 strömen. Je nach Betriebsweise kann eine feinporige Beschichtung zusätzlich auf der Innenoberfläche 17 oder auf der Außenoberfläche 18 aufgebracht sein.

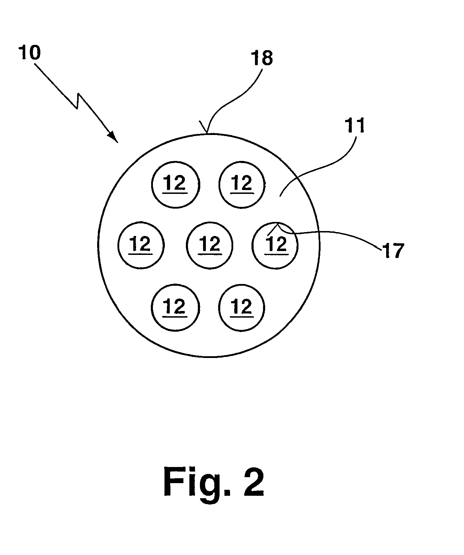

**Fig. 2** zeigt in Draufsicht ein keramisches Filterelement gemäß II-II von Fig. 1. Das keramische Filterelement 10 ist kreisrund ausgebildet und weist mehrere Durchlassöffnungen 12 auf. Zwischen den einzelnen Durchlassöffnungen 12 sind Wandungen 11 ausgebildet, die teilweise oder vollständig als Filterfläche dienen. Die Innenoberfläche 17 und/oder die Außenoberfläche 18 können Funktionsbeschichtungen aufweisen, die auf die Einsatzbereiche der jeweiligen erfindungsgemäßen keramischen Filterelemente 10 abgestimmt sind.

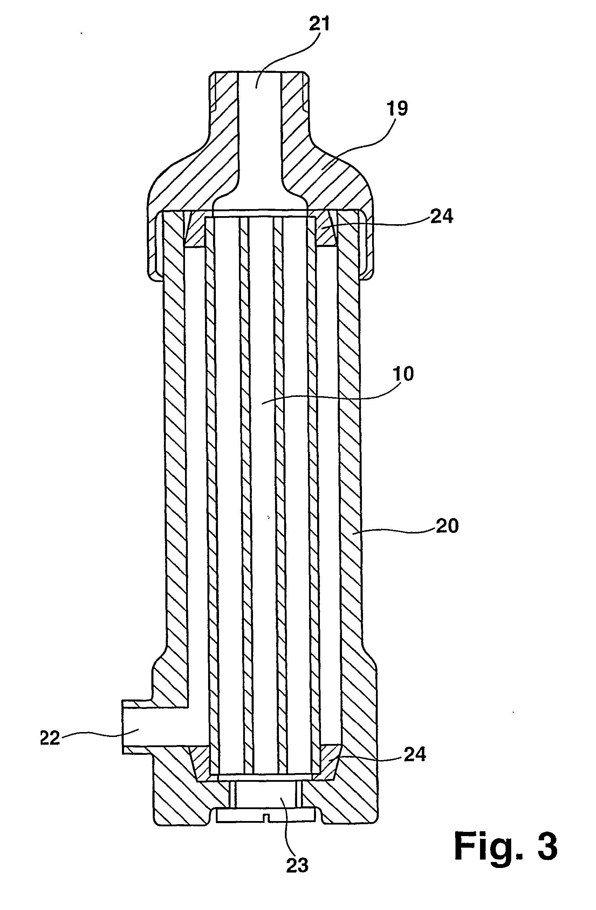

**Fig. 3** zeigt im Längsschnitt einen erfindungsgemäßen Filter mit einem keramischen Filterelement 10, wie es in ein Gehäuse bestehend aus einem Gehäusedeckel 19, einem Gehäusekörper 20 eingebaut ist. Der Gehäusedeckel 19 weist einen Wasserzulauf 21 und der Gehäusekörper 20 einen Wasserablauf 22 auf. Das zu behandelnde Wasser strömt über den Wasserzulauf 21 durch den Gehäusedeckel 19 in das keramische Filterelement 10 ein und verlässt über den Wasserablauf 22 als Filtrat das Gehäuse. Das Gehäuse selbst ist druckstabil aufgebaut und kann aus Kunststoff oder Metall gefertigt sein. Am unteren Ende des Gehäusekörpers 20 ist eine Verschlussschraube 23 vorgesehen, die zur Rückspülung und zum Säubern des keramischen Filterelements 10 aus dem Gehäusekörper 20 herausgedreht werden kann. Das keramische Filterelement 10 ist über Dichtungen 24 in den Gehäusekörper 20 und in den Gehäusedeckel 19 eingefügt und auch die Verschlussschraube 23 ist flüssigkeitsdicht in den Gehäusekörper 20 eingedreht.

Am freien Ende des Gehäusedeckels 19 sowie am freien Ende des Wasserablaufs 22 können Schnellverschlüsse bzw. entsprechende Kupplungssysteme angebracht sein, damit diese Gehäuseteile einfachst an einen Wasserhahn bzw. an vorhandene Schlauchsysteme angeschlossen werden können. Der Gehäusedeckel 19 ist lösbar, aber flüssigkeits- und druckdicht mit dem Gehäusekörper 20 verbunden.

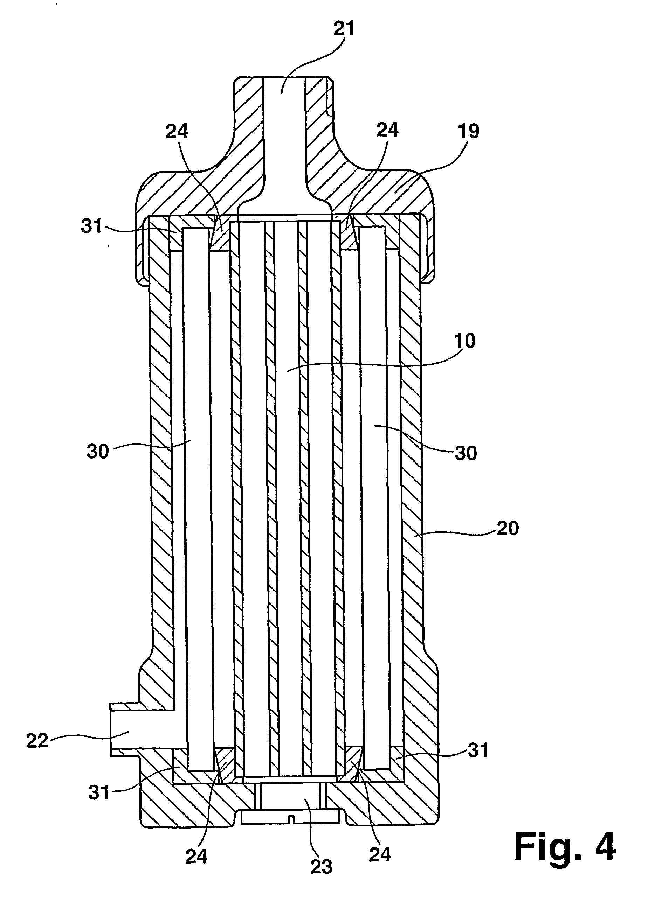

**Fig. 4** zeigt einen erfindungsgemäßen Filter im Längsschnitt. Das Filterelement des Filters ist entsprechend dem in Fig. 3 dargestellten Filterelement aufgebaut, weist jedoch zusätzlich ein Aktivkohlefilterelement 30 auf, das den rohrförmigen Körper des keramischen Filterelements 10 umhüllt. Das Aktivkohlefilterelement 30 und der rohrförmige Körper des keramischen Filterelements 10 sind in das Gehäuse, das über einen Wasserzulauf 21 und einen Wasserablauf 22 verfügt, integriert. Das Aktivkohlefilterelement 30 ist mittels jeweils eines Dichtsitzes 31 abdichtend um den rohrförmigen Körper des keramischen Filterelements 10 herum angeordnet. Das zu filtrierende Wasser strömt druckbeaufschlagt, es wird also eine Zwangsströmung ausgebildet, über die Innenoberfläche der Durchlassöffnungen zur Außenoberfläche des rohrförmigen Körpers und weiter durch das Aktivkohlefilterelement 30, also von innen nach außen. Das zu reinigende Wasser durchströmt daher nacheinander den rohrförmigen Körper des keramischen Filterelements 10 und das Aktivkohlefilterelement 30. Das Aktivkohlefilterelement kann auch aus einer losen Schüttung von Aktivkohle gebildet sein. Ein Dichtsitz kann dann entfallen. Das Aktivkohlefilterelement 30 dient z.B. der Entfernung von organischen Geschmacksstoffen und/oder von Chlor aus dem zu filternden Wasser.

## Patentansprüche

1. Filter mit einem Gehäuse und einem keramischen Filterelement (10) zur Reinigung von Wasser, bestehend aus einem rohrförmigen Körper, der aus mindestens einer Wandung (11) und mindestens einer über der gesamten Länge des rohrförmigen Körpers ausgebildeten Durchlassöffnung (12) gebildet ist, wobei die mindestens eine Wandung (11) als Funktionsschicht oder als Träger mit einer Funktionsbeschichtung ausgebildet ist und das zu filtrierende Wasser druckbeaufschlagt entweder von der Außenoberfläche (18) in die Durchlassöffnung (12) oder über die Innenoberfläche (17) der Durchlassöffnung (12) zur Außenoberfläche (18) des keramischen Filterelements (10) strömt,
**dadurch gekennzeichnet, dass**
das keramische Filterelement (10) in das Gehäuse eingebaut ist, das einen Wasserablauf (22) und bevorzugt an einem offenen ersten Ende (13) der Durchlassöffnung (12) einen Wasserzulauf (21) aufweist, wobei das Gehäuse eine, ein offenes zweites Ende (14) der Durchlassöffnung (12) verschließende, Verschlussschraube (23) aufweist, wobei die Durchlassöffnung (12) durch Aufschrauben der Verschlussschraube (8) geöffnet werden kann, wodurch ein Durchspülen des Filterelements (10) ohne komplettes Auseinanderbauen des Filters ermöglicht wird.

2. Filter nach Anspruch 1, **dadurch gekennzeichnet, dass** das keramische Filterelement (10) als stabförmiges Element im Querschnitt kreisrund mit mehreren Durchlassöffnungen (12) ausgebildet ist.

3. Filter nach Anspruch 1 oder 2, **dadurch gekennzeichnet, dass** das keramische Filterelement (10) über einen Sinterprozess aus chemischen Verbindungen aus der Gruppe der Chalkogenide, bevorzugt Oxide und/oder Sulfide und/oder Carbide und/oder Nitride hergestellt ist.

4. Filter nach einem der Ansprüche 1 bis 3, **dadurch gekennzeichnet, dass** der rohrförmige Körper des keramischen Filterelements (10) von einem Aktivkohlefilterelement (30) umhüllt ist.

5. Filter nach einem der Ansprüche 1 bis 4, **dadurch gekennzeichnet, dass** das keramische Filterelement (10) ein Mundstück aufweist.

6. Filter nach einem der Ansprüche 1 bis 5, **dadurch gekennzeichnet, dass** das Gehäuse mehrteilig aus einem Gehäusedeckel (19) und einem Gehäusekörper (20) gebildet ist, wobei die einzelnen Gehäuseteile flüssigkeitsdicht lösbar miteinander verbunden sind.

7. Filter nach Anspruch 6, **dadurch gekennzeichnet, dass** am Gehäusedeckel (19) und/oder am Gehäusekörper (20) Anschlüsse, bevorzugt Schnellverschlüsse, zum Ankoppeln an Armaturen und/oder Schläuche anbringbar und/oder ausgebildet sind.

8. Filter nach einem der Ansprüche 1 bis 7, **dadurch gekennzeichnet, dass** das keramische Filterelement (10) aus einem grobporigen Träger und einer feinporigen Funktionsbeschichtung gebildet ist.

9. Filter nach einem der Ansprüche 1 bis 8, **dadurch gekennzeichnet, dass** das keramische Filterelement (10) biozid und/oder mit einem Silberionen enthaltenden Werkstoff beschichtet und/oder behandelt ist.

## Claims

1. Filter comprising a housing and a ceramic filter element (10) for cleaning water, comprising a tubular body, which is formed by at least one wall (11) and at least one through opening (12) implemented over the entire length of the tubular body, the at least one wall (11) being implemented as a functional layer or as a carrier having a functional coating and the water to be filtered flowing pressurized either from the outer surface (18) into the through opening (12) or via the inner surface (17) of the through opening (12) to the outer surface (18) of the ceramic filter element (10),
**characterized in that**
the ceramic filter element (10) is installed in the housing which has a water outlet (22) and, preferably on an open first end (13) of the through opening (12), a water inlet (21), the housing having a closure screw (23) which closes an open second end (14) of the through opening (12), wherein the through opening (12) can be opened by unscrewing the closure screw (8), through which flushing of the filter element (10) is made possible without complete disassembly of the filter.

2. Filter according to Claim 1, **characterized in that** the ceramic filter element (10) is implemented as a rod-shaped element which is circular in cross-section having multiple through openings (12).

3. Filter according to Claim 1 or 2, **characterized in that** the ceramic filter element (10) is produced via a sintering process from chemical compounds from the group of chalcogenides, preferably oxides and/or sulfides and/or carbides and/or nitrides.

4. Filter according to one of Claims 1 through 3, **characterized in that** the tubular body of the ceramic filter element (10) is enclosed by an activated carbon filter element (30).

5. Filter according to one of Claims 1 through 4, **characterized in that** the ceramic filter element (10) has a mouthpiece.

6. Filter according to one of Claims 1 through 5, **characterized in that** the housing is formed in multiple parts from a housing cover (19) and a housing body (20), the individual housing parts being removably connected to one another in a liquid-tight fashion.

7. Filter according to Claim 6, **characterized in that** attachments, preferably quick-acting closures, for coupling to fittings and/or hoses, may be attached and/or implemented on the housing cover (19) and/or on the housing body (20).

8. Filter according to one of Claims 1 through 7, **characterized in that** the ceramic filter element (10) is formed from a coarse-pored carrier and a fine-pored functional coating.

9. Filter according to one of Claims 1 through 8, **characterized in that** the ceramic filter element (10) is coated and/or treated with a biocidal material and/or a material containing silver ions.

## Revendications

1. Filtre comprenant un carter et un élément filtrant céramique (10) pour la purification de l'eau, constitué d'un corps de forme tubulaire qui est formé par au moins une paroi (11) et au moins une ouverture de passage (12) réalisée sur la totalité de la longueur du corps de forme tubulaire, ladite au moins une paroi (11) étant réalisée en tant que couche fonctionnelle ou en tant que support ou substrat d'un revêtement fonctionnel, et l'eau à filtrer s'écoulant, soumise à pression, soit de la surface extérieure (18) dans l'ouverture de passage (12), soit à partir de la surface intérieure (17) de l'ouverture de passage (12) vers la surface extérieure (18) de l'élément filtrant céramique (10),
**caractérisé en ce que** l'élément filtrant céramique (10) est monté dans le carter qui comporte un écoulement de sortie d'eau (22) et, de préférence à une première extrémité (13) ouverte de l'ouverture de passage (12), une arrivée d'entrée d'eau (21), le carter comprenant une vis de fermeture (23) qui obture une deuxième extrémité (14) ouverte de l'ouverture de passage (12), et l'ouverture de passage (12) pouvant être ouverte par dévissage de la vis de fermeture (23), en permettant ainsi un rinçage de l'élément filtrant (10) sans démontage complet du filtre.

2. Filtre selon la revendication 1, **caractérisé en ce que** l'élément filtrant céramique (10) est réalisé en tant qu'élément en forme de barre de section transversale ronde circulaire, avec plusieurs ouvertures de passage (12).

3. Filtre selon la revendication 1 ou 2, **caractérisé en ce que** l'élément filtrant céramique (10) est fabriqué à l'aide d'un procédé de frittage de composés chimiques du groupe des chalcogénures, de préférence des oxydes et/ou des sulfures et/ou des carbures et/ou des nitrures.

4. Filtre selon l'une des revendications 1 à 3, **caractérisé en ce que** le corps de forme tubulaire de l'élément filtrant céramique (10) est enveloppé par un élément filtrant à charbon actif (30).

5. Filtre selon l'une des revendications 1 à 4, **caractérisé en ce que** l'élément filtrant céramique (10) présente un embout buccal.

6. Filtre selon l'une des revendications 1 à 5, **caractérisé en ce que** le carter est réalisé en plusieurs parties, à savoir un couvercle de carter (19) et un corps de carter (20), les parties individuelles du carter étant assemblées les unes aux autres de manière démontable et étanche aux liquides.

7. Filtre selon la revendication 6, **caractérisé en ce que** sur le couvercle de carter (19) et/ou sur le corps de carter (20) peuvent être rapportés et/ou sont réalisés des raccords, de préférence des raccords rapides, pour le couplage à des systèmes de robinetteries et/ou à des tuyaux.

8. Filtre selon l'une des revendications 1 à 7, **caractérisé en ce que** l'élément filtrant céramique (10) est formé par un support ou substrat à pores grossiers et un revêtement fonctionnel à pores fins.

9. Filtre selon l'une des revendications 1 à 8, **caractérisé en ce que** l'élément filtrant céramique (10) est revêtu et/ou traité biocide et/ou avec une matière renfermant des ions argent.
